(19) Europäisches Patentamt

European Patent Office

Office européen des brevets

(11) Veröffentlichungsnummer: **0 406 653 A2**

# (12) EUROPÄISCHE PATENTANMELDUNG

(21) Anmeldenummer: 90111973.5

(22) Anmeldetag: 23.06.90

(51) Int. Cl.5: **E02D 29/02**, A01G 9/02, E01F 8/00

(30) Priorität: 04.07.89 AT 1632/89

(43) Veröffentlichungstag der Anmeldung: 09.01.91 Patentblatt 91/02

(84) Benannte Vertragsstaaten: **CH DE DK FR GB IT LI SE**

(71) Anmelder: **Hans-Ulrich Terkl und Co. KG.**
**Edelackerstrasse 17**
**A-8642 St. Lorenzen i.M.(AT)**

(72) Erfinder: **Terkl, Hans-Ulrich, Ing.**
**Flurgasse 7**
**A-8641 St. Marein im Mürztal(AT)**

(74) Vertreter: **Puchberger, Peter, Dipl.-Ing. et al**
**Patentanwälte Dipl.-Ing. Georg Puchberger**
**Dipl.-Ing. Rolf Puchberger Dipl.-Ing. Peter**
**Puchberger Singerstrasse 13**
**A-1010 Wien(AT)**

(54) **Sichtwand.**

(57) Die Erfindung betrifft eine Sichtwand, die in erster Linie dadurch gekennzeichnet ist, daß sie aus einer oder mehreren vorgefertigten Tafeln (4, 5, 6) gebildet ist, wobei jede Tafel aus übereinander geschichteten Läufern (7) in Form von Stämmen oder Blöcken aus Holz, Beton oder ähnlichem Baumaterial gebildet ist, zwischen den Läufern (7) Distanzstücke (8, 9) angeordnet sind, sodaß die Läufer in einem Abstand von etwa ihrer zweifachen Stärke übereinander angeordnet sind und daß die Tafeln durch Anker (33, 34, 35, 37) zusammengehalten sind.

## Fig.1

Die Erfindung betrifft eine Sichtwand. Insbesondere betrifft die Erfindung eine Sichtwand aus übereinander und gegebenenfalls nebeneinander geschichteten Läufern in Form von Stämmen oder Blöcken aus Holz, Beton oder ähnlichem Baumaterial, wobei zwischen den genannten Läufern Räume zur Bepflanzung angeordnet sind. Derartige Sichtwände können entweder selbsttragende bzw. -stützende Wände sein oder Stützwänden vorgesetzt werden.

Ziel der vorliegenden Erfindung war es, bei derartigen Sichtwänden ein möglichst günstiges Verhältnis zwischen den sichtbaren Elementen der Wand und den dazwischenliegenden Vegetationszonen vorzusehen. Weiters sollen die Sichtwände weitgehend vorgefertigt am Aufstellort möglichst einfach und rasch aufgestellt werden können. Die Bepflanzung der Vegetationsräume soll möglichst einfach erfolgen, wobei ein gutes Anwachsen gewährleistet sein soll.

Die erfindungsgemäße Sichtwand ist dadurch gekennzeichnet, daß sie aus einer oder mehreren vorgefertigten Tafeln gebildet ist, wobei jede Tafel aus übereinander geschichteten Läufern in Form von Stämmen oder Blöcken aus Holz, Beton oder ähnlichem Baumaterial gebildet ist, zwischen den Läufern Distanzstücke angeordnet sind, sodaß sie in einem Abstand von etwa ihrer zweifachen Stärke übereinander angeordnet sind und daß die Tafeln durch Anker zusammengehalten sind.

Weitere vorteilhafte Merkmale der Erfindung sind den Patentansprüchen und der nachfolgenden Beschreibung sowie der Zeichnung zu entnehmen.

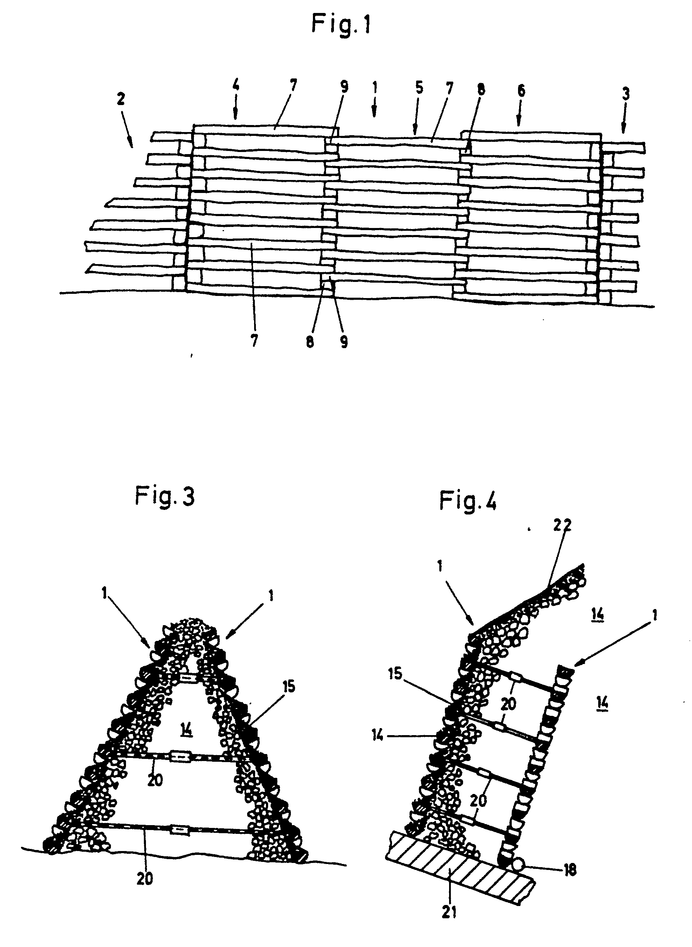

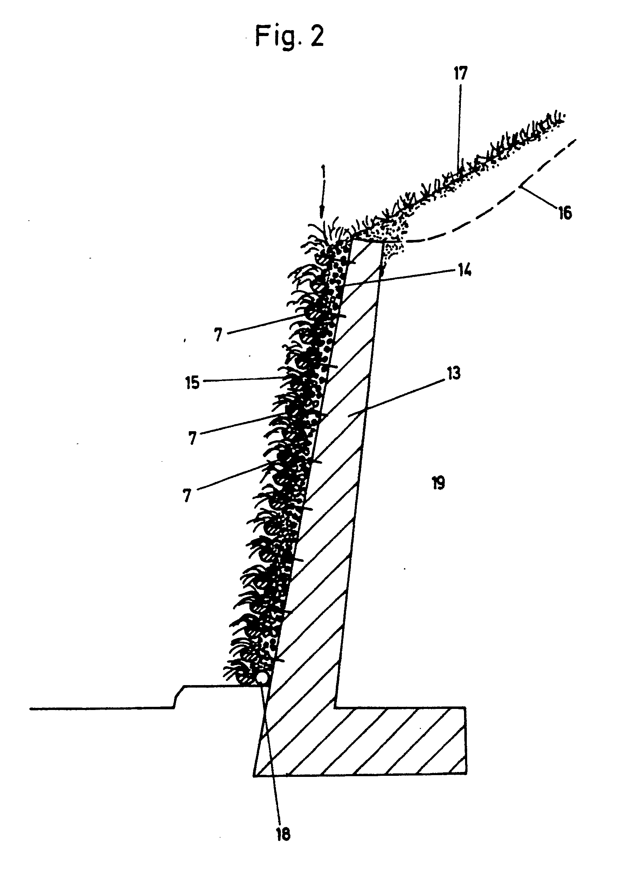

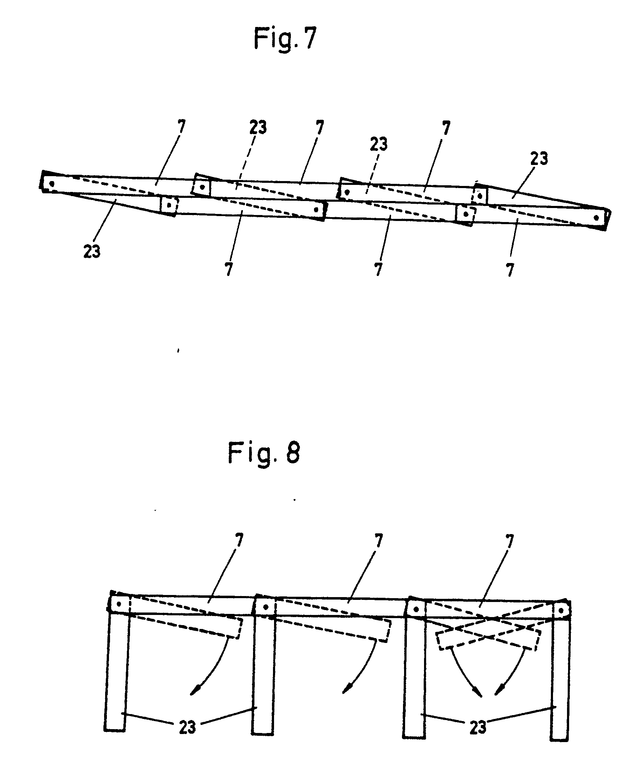

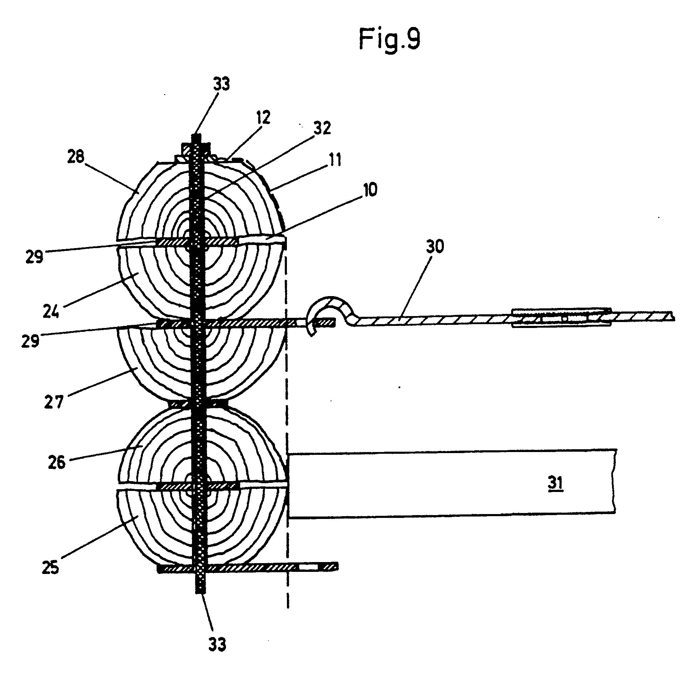

Fig. 1 zeigt eine erfindungsgemäße Sichtwand in Vorderansicht ohne Bepflanzung und Fig. 2 einen Schnitt durch die Sichtwand und eine dahinterliegende Stützwand. Die Fig. 3 bis 6 zeigen im Schnitt verschiedene Ausführungsformen der Sichtwand. Die Fig. 7, 8 veranschaulichen zwei Ausführungsbeispiele der Sichtwand in Ansicht von oben in teilweise zusammengeklapptem Zustand. Die Fig. 9 bis 13 zeigen Detailschnitte.

Fig. 1 zeigt die Vorderansicht einer erfindungsgemäßen Sichtwand. Eine Tafel 1 ist zur Gänze dargestellt, wohingegen die sich links und rechts daran anschließenden Tafeln 2, 3 abgebrochen eingezeichnet sind. Die Tafel 1 besteht aus drei Feldern 4, 5 und 6. Die Tafel 1 kann im Werk vormontiert werden und einstückig durch entsprechende Transport-und Hebewerkzeuge zum Aufstellungsort gebracht und dort versetzt werden.

Jedes Feld umfaßt horizontale Läufer 7, die übereinander geschichtet sind und durch Stämme oder Blöcke aus Holz, Beton oder ähnlichem Baumaterial gebildet sind. Zwischen den Läufern sind jeweils Distanzstücke 8, 9 angeordnet, sodaß die Läufer in einem Abstand von etwa ihrer zweifachen Stärke übereinander angeordnet sind. Innerhalb einer Tafel sind die Distanzstücke 8 kurze derartige Stücke, wohingegen die Distanzstücke 9 durch die Enden der benachbarten Läufer 7 gebildet sind. Die Läufer und Distanzstücke haben im wesentlichen den gleichen Querschnitt und sind in bevorzugter Weise Halbrundlinge (siehe z.B. Fig. 9), die eine Flachseite 10, die Halbrundung 11 und parallel zur Flachseite die Auflagenebene 12 aufweisen.

Die Zwischenräume zwischen den Läufern 7 können entweder mit Erde verfüllt und bepflanzt werden, oder es werden in bevorzugter Weise vorkultivierte Elemente aus Erdmaterial und Pflanzen eingesetzt, wie dies später detaillierter beschrieben wird.

Fig. 2 zeigt einen Schnitt durch eine Stützmauer 13, der die Tafel 1 einer Sichtwand gemäß Erfindung vorgesetzt ist. Zwischen der Sichtwand und der Stützmauer ist Hinterfüllmaterial 14 vorgesehen und zwischen den Läufern 7 befindet sich Erdreich mit Pflanzen 15. Im oberen Bereich der Stützmauer ist eine den Niederschlag sammelnde und in das Hinterfüllmaterial oder auf die Sichtwand leitende Fläche 16 angeordnet, die z.B. aus einer Kunststoffolie bestehen kann, die in der darüberliegenden Böschung 17 eingegraben ist. Am unteren Ende der Sichtwand bzw. des Hinterfüllmaterials ist eine Dränage 18 angeordnet, um überschüssiges Wasser wieder abzuleiten. Die Sichtwand ist durch Ankerdübel 19 mit der Stützmauer 13 verbunden.

Die Fig. 3 und 4 zeigen Schnitte durch andere Ausführungsbeispiele für das Aufstellen der erfindungsgemäßen Sichtwand.

Bei dem Ausführungsbeispiel gemäß Fig. 3 sind zwei Sichtwandtafeln 1 schräg gegeneinander gestellt, und der dazwischenliegende Raum ist durch das Hinterfüllmaterial 14 ausgefüllt. Nach den statischen Erfordernissen sind die beiden Sichtwandtafeln 1 durch Zuganker oder Zug-Druckanker 20 miteinander verbunden.

Bei der Ausführungsvariante nach Fig. 4 sind auf einem schrägen Fundament 21 parallel zueinander zwei Sichtwandtafeln 1 aufgestellt, die miteinander durch Zug-Druckanker 20 verbunden sind. Der Raum zwischen den beiden Tafeln 1 und der Raum auf der Hangseite sind ebenfalls mit Hinterfüllmaterial 14 gefüllt, um den statischen Anforderungen zu entsprechen. Die nach Fertigstellung sich ergebende Böschung ist mit 22 angedeutet. Die vordere (linkgs eingezeichnete) Sichtwand kann wie bei den vorangegangenen Ausführungsbeispielen mit Vegetation versehen werden, wohingegen die rechts eingezeichnete hintere Tafel im Hinterfüllmaterial liegt und somit die statische Festigkeit erhöht.

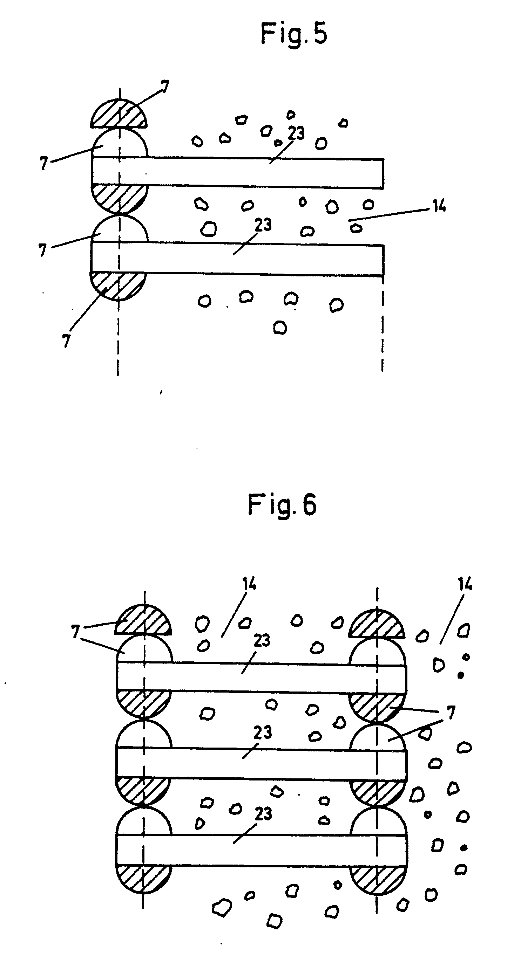

Bei den Ausführungsbeispielen gemäß den Fig. 5 und 6 sind die Distanzstücke zwischen den Läufern als von der Tafel der Sichtwand wegragende Binder 23 vorgesehen. Die in der Zeichnung Fig. 5 jeweils übereinanderliegenden Läufer 7 gehören jeweils zu den nebeneinanderliegenden Feldern einer Tafel. Die Binder 23 ragen nach hinten in das Hinterfüllmaterial 14 und erhöhen somit die statische Festigkeit der Sichtwand.

Bei dem Ausführungsbeispiel Fig. 6 greifen die Binder 23 auch an der hangseitigen Rückseite in eine weitere Sichtwandtafel, die zu der ersten Sichtwandtafel 1 parallel ist. Eine derartige Konstruktion kann entweder analog zum Ausführungsbeispiel Fig. 4 als Stützmauer eingesetzt werden, oder sie kann senkrecht stehend als freie Mauer angeordnet sein, die zur Gänze mit Vegetation versehen werden kann.

Fig. 7 zeigt eine vorteilhafte Ausbildung der Konstruktion gemäß Fig. 6 in zusammengeklapptem Zustand für den Transport. Es kann so eine komplette doppelte Sichtwand platzsparend auf einem LKW transportiert werden. Beim Aufstellen werden die beiden Sichtwandtafeln 1 gegeneinander verschoben und dabei die Binder 23 in eine zu den Tafeln 1 senkrechte Lage verschwenkt. Fig. 8 zeigt eine analoge für den Transport platzsparende Anordnung bei freistehenden Bindern 23, wie sie für eine Sichtwand gemäß Fig. 5 verwendet werden kann.

Fig. 9 zeigt einen Vertikalschnitt durch eine erfindungsgemäße Sichtwandtafel in jenem Bereich, in dem die Läufer zweier nebeneinanderliegender Tafeln und die Distanzstücke übereinanderliegen. Die Läufer 24, 25 gehören zur einen Tafel und liegen parallel übereinander. Mit 26 ist das Distanzstück bezeichnet. Die Läufer 27, 28 gehören zur anderen Tafel, wobei der Läufer 28 umgedreht ist und mit seiner Halbrundung 11 sowie seiner Auflagefläche 12 nach oben weist, um als abschließendes Element Regenwasser abzuweisen.

Zwischen den Läufern und Distanzstücken sind Lagerelemente 29 vorgesehen, die in bevorzugter Weise scheiben- oder plattenförmige Kunststoffoder Metallager sind. Zwei der Lagerelemente sind zur Aufnahme von Befestigungselementen ausgebildet, wobei ein Zugspannglied 30 beispielsweise eingezeichnet ist. Zur Aufnahme von Druckkräften ist ein Stützpfosten 31 eingezeichnet.

In einer durchgehenden Bohrung 32 durchragt ein Spannglied 33 die Läufer und Distanzstücke der Tafel über ihre ganze Höhe. Durch das Spannglied 33 kann somit die Tafel als komplette Baueinheit versetzt werden, und durch das Spannglied ist auch die notwendige statische Festigkeit gegeben.

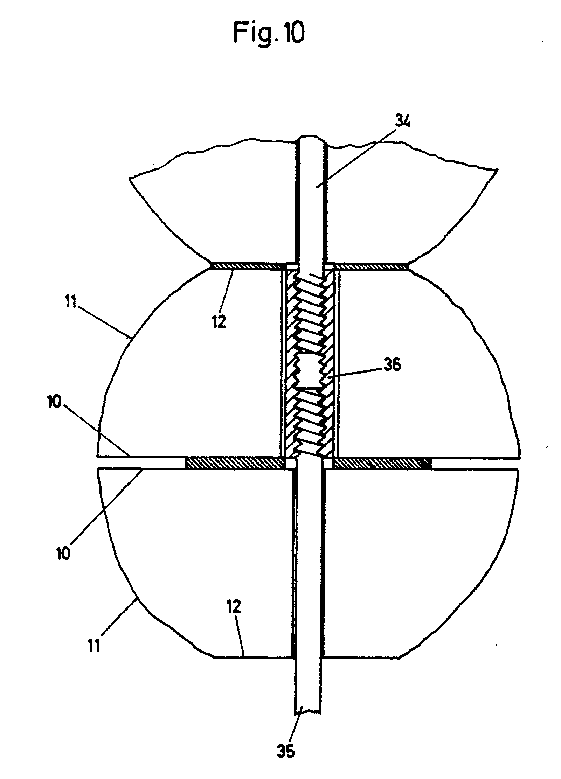

Fig. 10 zeigt einen Detailschnitt, wobei zur Ausbildung eines Fugenstoßes zwei Spannglieder 34, 35 durch eine Überschubmuffe 36 miteinander verbunden sind. Die Spannglieder 34, 35 können z.B. aus verzinktem Rippentorstahl bestehen, dessen Enden mit entsprechenden Gewinden versehen sind, um die Überschubmuffen oder an den Enden die Spannmuttern aufschrauben zu können.

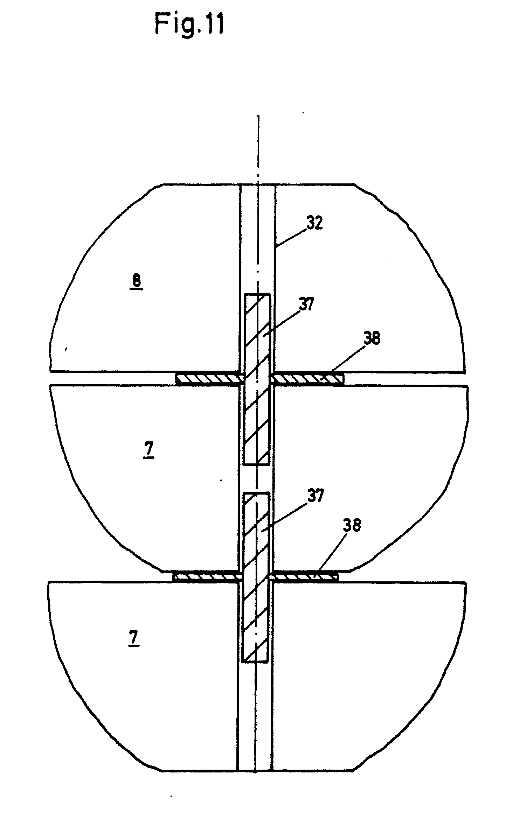

Fig. 11 zeigt die Anordnung von Verbindungselementen in Form von Zapfen 37, die mit Auflagerplatten 38 versehen sind. Die Zapfen 37 sind in den Bohrungen 32 gelagert und verhindern ein Verschieben der Läufer oder Distanzstücke gegeneinander. Diese Zapfenkonstruktion kann vorgesehen werden, wenn ein Verspannen von Läufern oder Distanzstücken nicht notwendig ist.

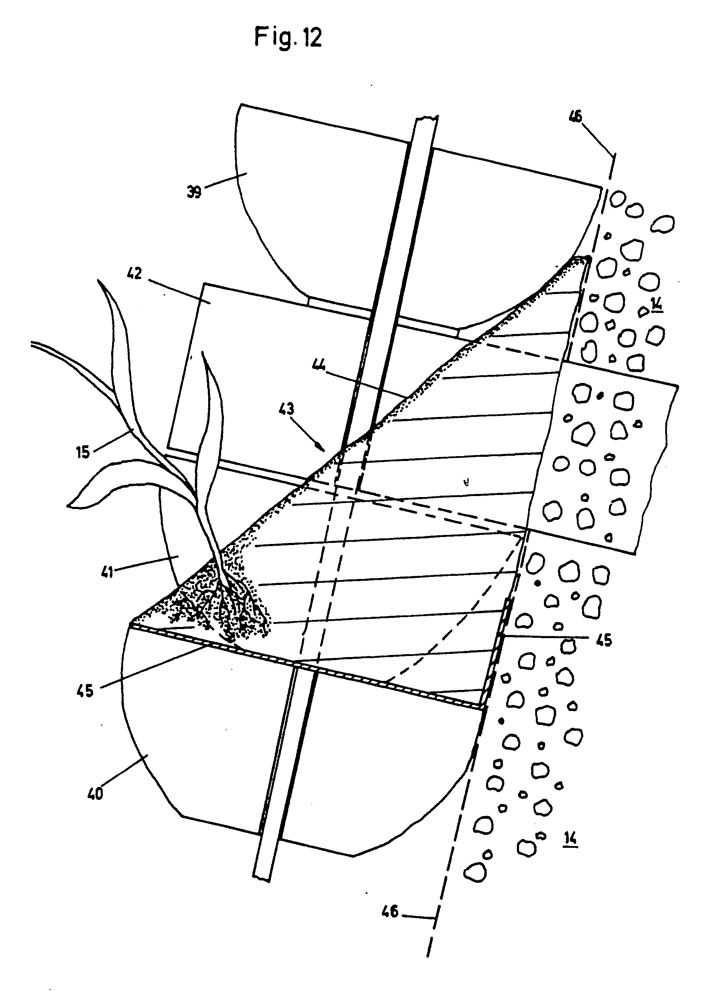

Fig. 12 zeigt im Detail eine bevorzugte Ausgestaltung der Vegetationszone zwischen zwei übereinanderliegenden Läufern 39, 40 einer erfindungsgemäßen Sichtwand. Mit 41 ist der Läufer der benachbarten Tafel bezeichnet, über dem das Distanzstück 42 liegt. In der Vegetationszone liegt ein vorkultiviertes Vegetationspaket 43, das im wesentlichen dreieckigen Querschnitt hat. Der Böschungswinkel der Fläche 44, aus der die Pflanzen 15 herauswachsen, ergibt sich durch den Abstand zwischen den beiden Läufern derart, daß genügende statische Festigkeit für das Vegetationspaket gegeben ist. Das Vegetationspaket besteht vor allem aus Erdmaterial mit entsprechenden Zuschlagsstoffen und Pflanzenbestandteilen, wie Wurzeln.

Bei der erfindungsgemäßen Anordnung können die Sichtwände schon im Produktionsbetrieb mit den vorkultivierten Vegetationspaketen versehen und somit im fertig begrünten Zustand an den Aufstellungsort gebracht werden. Alternativ dazu kann auch die Sichtwand vorerst leer versetzt werden und die Vegetationspakete werden erst danach in die Vegetationszonen eingebracht.

Die Vegetationspakete können gemäß Fig. 12 an der unteren Fläche einen Wasserspeicher aufweisen, wie z.B. durch Anordnung der Kunststoffolie 45.

Die Tafeln sind an der Rückseite mit einem netz- oder gitterartigen Material 46 hinterkleidet. Dieses netz- oder gitterartige Material 46 hindert das Hinterfüllmaterial 14 daran, durch die Vegetationszone durchzudringen und die Vegetationspakete herauszudrücken oder zu beschädigen. Andererseits hindert dieses netz- oder gitterartige Material nicht das Auswachsen der Wurzeln in das Hinterfüllmaterial, wodurch dieses gefestigt wird und die Pflanzen mit Wasser versorgt werden können. Eine derartige Hinterkleidung der Tafeln mit einem netz- oder gitterartigen Material kann bei allen dargestellten Ausführungsformen der Sichtwand vorgesehen werden.

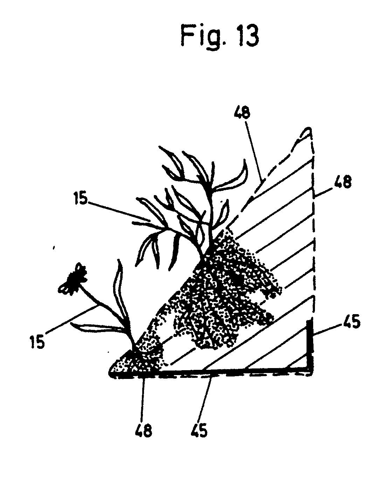

Fig. 13 zeigt eine Ausführungsart des Vegetationspaketes, wobei bei der Herstellung das Erdmaterial mit den notwendigen Zuschlagsstoffen auf die Kunststoffolie 45 mit dreieckigem Querschnitt aufgeschichtet wird, beispielsweise in einer entsprechenden Form. Allseitig kann ein Gewebe 48 vorgesehen werden, um das Vegetationspaket zu verfestigen und in Form zu halten. Die Pflanzen 15 können durch das Gewebe 48 durchwachsen.

## Ansprüche

1. Sichtwand, dadurch gekennzeichnet, daß sie aus einer oder mehreren vorgefertigten Tafeln (4, 5, 6) gebildet ist, wobei jede Tafel aus übereinander geschichteten Läufern (7) in Form von Stämmen oder Blöcken aus Holz, Beton oder ähnlichem Baumaterial gebildet ist, zwischen den Läufern (7) Distanzstücke (8, 9) angeordnet sind, sodaß die Läufer in einem Abstand von etwa ihrer zweifachen Stärke übereinander angeordnet sind und daß die Tafeln durch Anker (33, 34, 35, 37) zusammengehalten sind.

2. Sichtwand nach Anspruch 1, dadurch gekennzeichnet, daß die Höhe jeder Tafel (4, 5, 6) der Höhe der Sichtwand (1, 2, 3) entspricht.

3. Sichtwand nach Anspruch 1 oder 2, dadurch gekennzeichnet, daß die Läufer (7) und Distanzstücke (8) aus Halbrundlingen bestehen, die an der Halbrundung (11) parallel zur Flachseite (10) eine Auflagenebene (12) aufweisen.

4. Sichtwand nach einem der Ansprüche 1 bis 3, dadurch gekennzeichnet, daß zwischen den Lagerflächén der Läufer (7, 24, 25) und den Distanzstükken (26) Lagerelemente (29, 38) vorgesehen sind.

5. Sichtwand nach Anspruch 4, dadurch gekennzeichnet, daß die Lagerelemente (29, 38) scheiben- oder plattenförmige Kunststoff- oder Metallager sind.

6. Sichtwand nach Anspruch 5, dadurch gekennzeichnet, daß die Lagerelemente (29) zur Aufnahme von Befestigungselementen, wie Zugspanngliedern (30) oder Stütz- und Verbundanker, ausgebildet sind.

7. Sichtwand nach einem der vorhergehenden Ansprüche, dadurch gekennzeichnet, daß die Sichtwand aus mehreren Tafeln zusammengesetzt ist, deren Läufer gegeneinander versetzt sind, wobei die Enden der aneinanderliegenden Läufer (7) als Distanzstücke (9) dienen (Fig. 1).

8. Sichtwand nach einem der vorhergehenden Ansprüche, dadurch gekennzeichnet, daß Distanzstükke als von der Tafel der Sichtwand wegragende Binder (23) vorgesehen sind.

9. Sichtwand nach Anspruch 8, dadurch gekennzeichnet, daß die freien Enden der Binder ihrerseits wieder als Distanzstücke für eine zur ersten Tafel parallel liegende zweite Tafel ausgebildet sind (Fig. 6).

10. Sichtwand nach einem der vorhergehenden Ansprüche 1 bis 9, dadurch gekennzeichnet, daß die Binder für den Transport der Sichtwand an die Tafeln schwenkbar vorgesehen sind (Fig. 7, 8).

11. Sichtwand nach einem der vorhergehenden Ansprüche 1 bis 10, dadurch gekennzeichnet, daß die Anker Spannanker (33) sind, die die Tafeln der gesamten Höhe nach durchragen.

12. Sichtwand nach einem der vorhergehenden Ansprüche 1 bis 10, dadurch gekennzeichnet, daß die Anker Zapfen (37) mit Auflagerplatten (38) sind, wobei die Zapfen in entsprechende Ausnehmungen der Läufer und/oder Distanzstücke ragen.

13. Sichtwand nach einem der vorhergehenden Ansprüche 1 bis 12, dadurch gekennzeichnet, daß die Tafeln an der Rückseite mit einem netz- oder gitterartigen Material (46) hinterkleidet sind.

14. Sichtwand nach einem der vorhergehenden Ansprüche 1 bis 13, dadurch gekennzeichnet, daß zwischen den Läufern vorkultivierte Elemente (43) aus Erdmaterial und Pflanzen (15) vorgesehen werden.

15. Sichtwand nach Anspruch 14, dadurch gekennzeichnet, daß die vorkultivierten Elemente (43) etwa dreieckigen Querschnitt haben.

16. Sichtwand nach Anspruch 14 oder 15, dadurch gekennzeichnet, daß die vorkultivierten Elemente (43) an ihren unteren Flächen einen Wasserspeicher (45) aufweisen.

17. Sichtwand nach Anspruch 16, dadurch gekennzeichnet, daß als Wasserspeicher eine Kunststoffolie vorgesehen ist.

18. Stützwand, dadurch gekennzeichnet, daß einer Stützmauer (13) eine Sichtwand nach einem oder mehreren der vorstehenden Ansprüche 1 bis 17 vorgesetzt ist, wobei zwischen der Sichtwand und der Stützmauer Hinterfüllmaterial (14) vorgesehen ist.

19. Stützwand nach Anspruch 18, dadurch gekennzeichnet, daß im oberen Bereich der Stützmauer (13) eine den Niederschlag sammelnde und in das Hinterfüllmaterial (14) oder auf die Sichtwand (1) leitende Fläche (16) angeordnet ist.

# Fig.1

# Fig.3

# Fig.4

# Fig. 2

## Fig. 5

## Fig. 6

# Fig. 7

# Fig. 8

# Fig.9

# Fig. 10

## Fig.11

# Fig. 12

Fig. 13